# EUROPEAN PATENT SPECIFICATION

(11) **EP 0 873 485 B1**
(45) Date of publication and mention of the grant of the patent: **16.08.2001**
(21) Application number: 97903511.0
(22) Date of filing: 20.02.1997
(51) Int. Cl.: F16L 11/22, F16L 9/19, H01R 4/72, H01B 17/58, H02G 15/18, C09J 177/00

(54) **MULTI-LUMEN PLASTICS TUBING**
KUNSTSTOFFROHR MIT MEHREREN LUMEN
TUBE EN PLASTIQUE A LUMIERES MULTIPLES

(30) Priority: 26.02.1996 GB 9603991
(43) Date of publication of application: 28.10.1998
(73) Proprietor: RAYCHEM LIMITED, Dorcan, Swindon, Wiltshire SN3 5HH (GB)
(72) Inventor: WEST, Colin, George, Swindon, Wiltshire SN2 3JJ (GB); DISS, Colin, William, Swindon SN2 3QD (GB)
(74) Representative: Jay, Anthony William
(86) International application number: GB9700464
(87) International publication number: WO9731213

(56) References cited:
- EP-A- 0 516 444
- GB-A- 2 075 991
- US-A- 2 340 926
- US-A- 4 343 844
- US-A- 4 693 767

## Description

This invention relates to multi-lumen plastics tubing.

Multi-lumen plastics tubing is well known in itself (see for example US-A-4343844 and US-A-4693767), but the present invention relates to a special form of such tubing which may be particularly economical to manufacture and particularly effective for sealing purposes hereinafter described.

The invention accordingly provides extruded plastics tubing having at least one internal dividing wall formed by heat-flowable adhesive material co-extruded with the tubing to provide at least two lumens extending longitudinally within the tubing.

The adhesive material may form substantially only the dividing wall(s), each wall ending where it meets the interior surface of the tubing or extending only a small distance across that surface towards the adjacent dividing wall end. However, it is preferred to have a co-extruded layer of the adhesive material on the internal tubing surface extending circumferentially between the ends of the dividing wall(s) so that the adhesive material forms the interior surface of the said lumens for at least part of their length. The adhesive material may be any suitable adhesive, preferably a known hot-melt composition, for example having as a major component a polyamide or an ethylene/vinyl acetate copolymer.

Preferably, the tubing is heat-recoverable, preferably under conditions which will cause the adhesive material to flow, suitable conditions being generally known from plastics articles which have been internally coated with a layer of adhesive (not forming dividing walls) after manufacture of the articles themselves. The invention accordingly includes the multi-lumen tubing after it has been heat recovered under the said conditions about objects inserted in the respective lumens so that the adhesive material bonds the obiects and the tubing together, preferably substantially sealing the tubing about the objects. This is especially useful when the said objects are electrical wires forming part of a wiring bundle or harness, which is to be blocked against ingress of fluid contaminants.

The tubing according to this invention can be made very efficiently by co-extrusion, the respective tubing materials and adhesive materials being selected by known criteria to suit co-extrusion temperatures and other conditions. Subject to those requirements, which are known in themselves, the materials may be selected from the many extrudable tube-forming plastics and hot-melt adhesives which are well known nowadays, especially in the field of heat-shrinkable tubing and shaped heat-shrinkable articles.

By way of example, a multi-lumen tubing according to the present invention was manufactured using a conventional co-extrusion set-up comprising an 88.9mm (3.5 inch) diameter single screw Francis Shaw extruder to produce the tubing outer jacket, and a 63.5mm (2.5 inch) diameter single screw Francis Shaw extruder to produce the multi-lumen adhesive liner.

A jacket compound based on a known polyethylene copolymer, and an adhesive liner based on a polyamide were fed to the appropriate extruders as pellets. The melt temperature of the jacket compound was 150°C, with barrel temperatures profiled from 130°C to 145°C.
The melt temperature of the adhesive compound was 145°C, with barrel temperatures profiled from 110°C to 140°C. The two melt flows were combined within a suitably-designed co-extrusion head which was set at 140°C and which formed the adhesive into transverse internal walls dividing the tubing into four substantially equal longitudinally-extending lumens. The resulting multi-lumen tubing from the co-extrusion head was then drawn through a water cooling bath by a conventional caterpillar haul-off and was subsequently wound onto a reel ready for the next process.

In order to give the tubing jacket a heat-shrink memory, it was cross-linked by passing through an electron beam at conditions (known per se) to achieve a hot modulus M_{100,} at 150°C, of between 0.4 and 0.5 MPa. The multi-lumen tubing was then expanded to the required diameter by heating the tubing to a temperature of 140°C and expanding, using equal air pressure in each of the lumens in order to achieve uniform expansion. Typical air pressure to achieve expansion was 89.6kPa (13 psi). The expanded tubing size was achieved and controlled by means of a water-cooled expansion die. After expansion the product was wound onto a cardboard spool for storage.

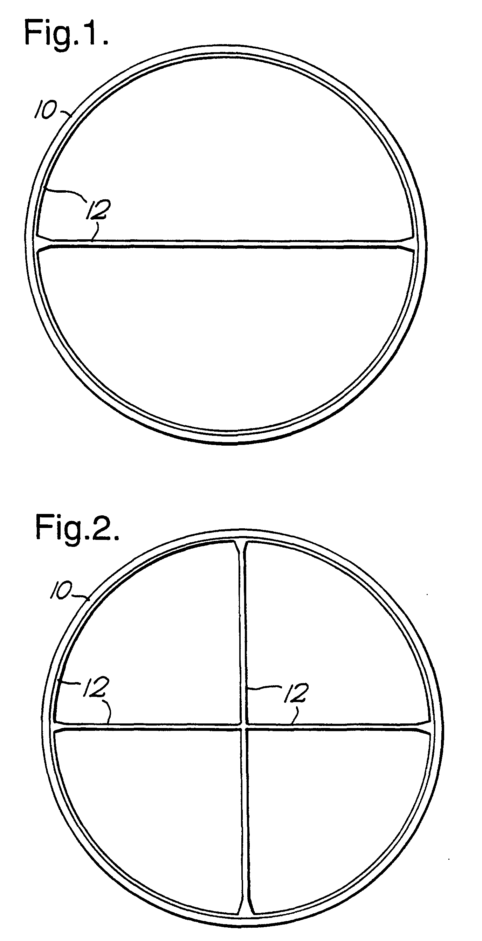

The cross-sectional shape of the tubing is not critical and may for example be rectangular, triangular, or oval, although substantially round tubing may often be preferred. The number and shape of the interior lumens are also not critical, although fewer than 10, preferably fewer than 8, more preferably fewer than 6, lumens may be convenient for many purposes. It may also be preferable for the lumens to be of reasonably uniform shape and reasonably symmetrical distribution within the tubing. For example, as shown in the accompanying Figure 1, a round tubing 10 having a single dividing wall of adhesive 12 forming two substantially equal "D" -shaped lumens, or having three or four walls 12, as shown in Figure 2, meeting substantially at the central axis of the tubing to form three or four substantially equal sector-shaped lumens, may be useful. Other configurations will readily occur to persons familiar with tube extrusion technology.

The materials will preferably be selected to enable the tubing to be expanded as known per se, together with its wall-forming adhesive lining in sufficiently heat-softened state, to render the tubing heat-recoverable. Expansion ratios of up to 3:1 have been found possible without breaking the lumen-forming adhesive dividing walls. Higher expansion ratios may benefit from the adhesive walls being thicker in the region of the surrounding tubular jacket than in the central region where the dividing adhesive walls meet one another. The adhesive material will preferably have a melting or softening temperature not more than 20°C, preferably not more than 10°C, below the minimum expansion temperature of the tubing. Adhesive melting or softening points substantially equal to, or preferably up to 15°C, more preferably up to 10°C, above the minimum tube expansion temperature may be advantageous in practice to achieve reliable solidification of the co-extruded adhesive dividing walls during manufacture, while still enabling the adhesive to melt and flow at temperatures to which it will be exposed during shrinking of the tubing in later use.

Suitably shaped co-extrusion heads for providing the extruded tubing with its co-extruded adhesive dividing walls in the selected forms can readily be devised by persons familiar with plastics extrusion technology. Conditions and equipment for extrusion, expansion and subsequent shrinking of heat-shrinkable tubing are also generally known.

## Claims

1. Extruded plastics tubing having at least one internal dividing wall formed by heat-flowable adhesive material co-extruded with the tubing to provide at least two lumens extending longitudinally within the tubing.

2. Tubing according to claim 1, having a co-extruded layer of the adhesive material on the internal tubing surface extending circumferentially between the ends of the dividing wall(s) so that the adhesive material forms the interior surface of the said lumens for at least part of their length.

3. Tubing according to claim 1 or 2, wherein the adhesive material is a hot-melt adhesive composition.

4. Tubing according to claim 3, wherein the hot-melt adhesive composition has as a major component a polyamide or an ethylene/vinyl acetate co-polymer.

5. Tubing according to any preceding claim which is heat-recoverable, preferably under conditions which will cause the adhesive material to flow.

6. Tubing according to claim 5, which has been heat recovered under the said conditions about objects inserted in the respective lumens so that the adhesive material bonds the objects and the tubing together, preferably substantially sealing the tubing about the objects.

7. Tubing according to claim 6, wherein the said objects are electrical wires forming part of a wiring bundle or harness.

## Patentansprüche

1. Extrudiertes Kunststoffrohr mit mindestens einer inneren Trennwand, die aus in der Wärme fließfähigem Klebermaterial gebildet ist, das mit dem Rohr coextrudiert ist, um mindestens zwei Lumen vorzusehen, die sich in Längsrichtung innerhalb des Rohres erstrecken.

2. Rohr nach Anspruch 1,
das eine coextrudierte Schicht des Klebermaterials auf der inneren Rohroberfläche aufweist, die sich in Umfangsrichtung zwischen den Enden der Trennwand (der Trennwände) erstreckt, so daß das Klebermaterial die innere Oberfläche der Lumen über zumindest einen Teil ihrer Länge bildet.

3. Rohr nach Anspruch 1 oder 2,
wobei das Klebermaterial eine Schmelzklebstoff-Zusammensetzung ist.

4. Rohr nach Anspruch 3,
wobei die Schmelzklebstoff-Zusammensetzung als eine Hauptkomponente ein Polyamid oder ein Ethylen/Vinyl-Acetat-Copolymer aufweist.

5. Rohr nach einem der vorherigen Ansprüche,
das wärmerückstellbar ist, vorzugsweise unter solchen Bedingungen, die das Klebermaterial zum Fließen bringen.

6. Rohr nach Anspruch 5,
das unter den genannten Bedingungen um Objekte herum wärmerückgestellt ist, die in die betreffenden Lumen eingesetzt sind, so daß das Klebermaterial die Objekte und das Rohr miteinander verbindet, wobei es vorzugsweise das Rohr um die Objekte herum im wesentlichen abdichtet.

7. Rohr nach Anspruch 6,
wobei die Objekte elektrische Drähte sind, die einen Teil eines Drahtbündels oder Kabelbaumes bilden.

## Revendications

1. Tube en matière plastique extrudée ayant au moins une cloison intérieure formée par une matière adhésive pouvant s'écouler à chaud, coextrudée avec le tube pour former au moins deux lumières s'étendant longitudinalement à l'intérieur du tube.

2. Tube selon la revendication 1, ayant une couche coextrudée de la matière adhésive sur la surface intérieure du tube s'étendant circonférentiellement entre les extrémités de la cloison ou des cloisons afin que la matière adhésive forme la surface intérieure desdites lumières sur au moins une partie de leur longueur.

3. Tube selon la revendication 1 ou 2, dans lequel la matière adhésive est une composition adhésive thermofusible.

4. Tube selon la revendication 3, dans lequel la composition adhésive thermofusible comporte, en tant que constituant principal, un polyamide ou un copolymère éthylène/acétate de vinyle.

5. Tube selon l'une quelconque des revendications précédentes, qui est doué de reprise de forme à chaud, avantageusement dans des conditions qui provoquent un écoulement de la matière adhésive.

6. Tube selon la revendication 5, qui a été soumis à une reprise de forme à chaud dans lesdites conditions autour d'objets insérés dans les lumières respectives afin que la matière adhésive lie les objets et le tube entre eux, de préférence en scellant substantiellement le tube autour des objets.

7. Tube selon la revendication 6, dans lequel lesdits objets sont des fils électriques formant une partie d'un faisceau ou d'un ensemble de câblage.
